# EUROPÄISCHE PATENTSCHRIFT

(11) **EP 1 611 210 B1**
(45) Veröffentlichungstag und Bekanntmachung des Hinweises auf die Patenterteilung: **16.03.2011**
(21) Anmeldenummer: 04725319.0
(22) Anmeldetag: 02.04.2004
(51) Int. Cl.: C09D 5/02, B05D 1/02, B05B 9/00

(54) **FARBE AUF BASIS MINDESTENS EINER POLYMERDISPERSION UND VERFAHREN ZUM AUFTRAG DER FARBE**
DYE BASED ON AT LEAST ONE POLYMER DISPERSION AND METHOD FOR APPLICATION OF THE DYE
COLORANT A BASE D'AU MOINS UNE DISPERSION POLYMERE ET PROCEDE D'APPLICATION DUDIT COLORANT

(30) Priorität: 04.04.2003 DE 10315483
(43) Veröffentlichungstag der Anmeldung: 04.01.2006
(73) Patentinhaber: Deutsche Amphibolin-Werke von Robert Murjahn Stiftung & Co KG, 64372 Ober-Ramstadt (DE); J. Wagner GmbH, 88677 Markdorf (DE)
(72) Erfinder: BEFURT, Uwe, 64372 Ober-Ramstadt (DE); HUMMERT, Thomas, 64397 Modautal (DE); BISTER, Erhard, 64846 Gross-Zimmern (DE); SAUSENG, Harald, 88356 Ostrach (DE); STECHER, Jürgen, 88097 Mariabrunn (DE); SORG, Viktor, 88682 Salem (DE); ZÖLLER, Heike, 88079 Kressbronn (DE); MAZENAUER, Rolf, CH-9443 Widnau (CH)
(74) Vertreter: Pfenning, Meinig & Partner GbR
(86) Internationale Anmeldenummer: PCT/EP2004/003530
(87) Internationale Veröffentlichungsnummer: WO 2004/087821

(56) Entgegenhaltungen:
- DE-A- 1 669 311
- US-B1- 6 465 047

## Beschreibung

Farben auf Basis mindestens einer Polymerdispersion die aus einer Kunststoffdispersion, Pigmenten und Füllstoffen bestehen, sind im Stand der Technik ein weit verbreitetes Beschichtungssystem zum Beschichten von Untergründen aller Art, insbesondere im Baubereich auf Innen- und Außenwände. Das Eigenschaftsbild der Dispersion, aber auch der daraus hergestellten Fertigprodukte, wird überwiegend vom jeweiligen Polymerisat geprägt. Bisher werden derartige Dispersionsfarben üblicherweise durch an und für sich bekannte Auftragsmittel, wie Walzen oder Pinsel, auf den Untergrund aufgebracht. Im Stand der Technik ist es bisher auch schon bekannt, derartige Dispersionsfarben mittels einer Sprühpistole zu verarbeiten.

Es hat sich dabei gezeigt, dass bei der Verarbeitung von Dispersionsfarben mit einer Spritzpistole, insbesondere der dabei entstehende Nebel in Form von feinen Tröpfchen, Schwierigkeiten bei der Verarbeitung bereitet. Zum einen führt der entstehende Nebel dazu, dass keine exakten Beschichtungen, d. h. das keine Beschichtungen realisierbar sind, bei denen ein scharf abgegrenztes Sprühbild realisiert werden kann und zweitens führt der dabei entstehende Nebel auch zu gesundheitlichen Problemen, da die bei den üblichen Spritzverfahren mit den bekannten Dispersionsfarben des Standes der Technik entstehenden feinen Nebel mit Größen < 15 µm zu gesundheitlichen Belastungen des verarbeitenden Personals führt.

Aus derUS 6,465,047 B1 ist ein Verfahren zum Auftragun einer wässrigen Polymerdispersion bekannt bei dem die Viskosität der eingesetzten Dispersion nach einem nicht bestimmten Meßverfahren zwischen 10 und 5.000 mPa/s liegt.

Ausgehend hiervon, ist es die Aufgabe der vorliegenden Erfindung, eine Farbe auf Basis mindestens einer Polymerdispersion vorzuschlagen, die es ermöglicht, dass die Farbe möglichst nebelfrei mit einer Spritzpistole verarbeitet werden kann. Gleichzeitig ist es die Aufgabe der vorliegenden Erfindung, ein entsprechendes Verfahren anzugeben.

Die Aufgabe wird in Bezug auf die Farbe durch die kennzeichnenden Merkmale des Patentanspruches 1 und in Bezug auf das Verfahren zum Auftragen durch die kennzeichnenden Merkmale des Patentanspruches 10 gelöst. Die Unteransprüche zeigen vorteilhafte Weiterbildungen auf.

Die erfindungsgemäße Farbe, nachfolgend Dispersionsfarbe genannt, besteht demnach aus einer Polymerdispersion, Pigmente, Füllstoffe, einem Verdicker sowie Dispergiermittel und Additive wobei die Viskosität dieser Dispersionsfarbe auf 3,5 bis 5 · 10² m Pa/s eingestellt ist. Die Viskosität wurde dabei bei einer Schergeschwindigkeit von 30.000 1/s mit der Kapillarrheometrie gemessen. Eine derartige Bestimmungsmethode der Viskosität ist z.B. beschrieben in R. W. Whorlov: Rheological Techniques, Verlag Elis Horwood, New York, 1992.

Gemäß der vorliegenden Erfindung, ist es für die Dispersionsfarbe wesentlich, dass der in Anspruch 1 angegebene Bereich für die Viskosität eingehalten wird. Es hat sich gezeigt, dass nur eine Dispersionsfarbe mit einer derartigen Zusammensetzung und einer derartigen Viskosität beim Verarbeiten mit einer Spritzpistole zu Tröpfchen führt, die eine bestimmte Mindestgröße nicht unterschreiten wodurch ein abgegrenztes Sprühbild erzeugt wird. Die erfindungsgemäße Farbe hat weiterhin den Vorteil, dass dadurch ein Einatmen von Sprühnebel weitestgehend vermieden wird.

Bei der erfindungsgemäßen Dispersionsfarbe ist dabei darauf zu achten, dass die in Anspruch 1 angegebene Zusammensetzung in Bezug auf die Polymerdispersion eingehalten wird. Gemäß der vorliegenden Erfindung ist es vorgesehen, dass 2-20 Gew.-% Polymerdispersion gerechnet als Feststoffanteil, 2-35 Gew.-% Pigmente, 5-60 Gew.-% Füllstoffe mit einem Partikeldurchmesser von 0,1 - 200 µm, 0,1 - 3 Gew.-% Verdicker, 0,1 - 2 Gew.-% Dispergiermittel sowie maximal bis 5 Gew.-% weitere Additive enthalten sind.

Aus stofflicher Sicht ist es bei der erfindungsgemäßen Dispersionsfarbe bevorzugt, wenn die Polymerdispersion ausgewählt ist aus.Polymeren die aus bestimmten Monomeren aufgebaut ist. Geeignete Monomere sind beispielsweise Carbonsäurevinylester mit 3 bis 20 Kohlenstoffatomen, insbesondere Vinylacetat, Vinylpropionat und Carbonsäurevinylester mit 9 bis 11 Kohlenstoffatomen in der Carbonsäurekomponente, weiterhin N-Vinylpyrrolidon und dessen Derivate, ethylenisch ungesättigte Carbonsäuren, deren Ester, deren Amide oder deren. Anhydride, weiterhin α-Olefine, insbesondere Ethylen und Propylen sowie Acrylnitril. Besonders bevorzugt ist die Verwendung ethylenisch ungesättigter Carbonsäuren, insbesondere von Acryl- und Methacrylsäure, weiterhin von ethylenisch ungesättigten Carbonsäureestern, insbesondere von Acryl- und Methacrylsäureestern mit 1 bis 12 Kohlenstoffatomen im Alkoholrest. Der Alkoholrest der Ester kann aus linearen oder verzweigten Alkylketten, Cycloaliphaten oder Aromaten bestehen, die zusätzlich mit Hydroxylgruppen, Halogenatomen oder Epoxidgruppen modifiziert sein können. Besonders bevorzugt ist auch der Einsatz von Styrol und Styrolderivaten.

Für die Pigmente können an und für sich die aus dem Stand der Technik bekannten Pigmente eingesetzt werden. Beispiele hierfür sind Titandioxid, Eisenoxid, Chromoxid, Kobaltblau, Phtalocyaninpigmente, Spinellpigmente sowie Nickel und Chromtitanate. Es können auch organische Pigmente wie Azopigmente, Chinacridonpigmente und/oder Dioxazinpigmente eingesetzt werden. Bei den Pigmenten hat es sich als besonders günstig erwiesen, wenn Titandioxid, eingesetzt wird. Als Füllstoffe kommen insbesondere Silikate, Carbonate, Flussspatsulfate und Oxide in Frage. Besonders bevorzugt bei den Füllstoffen sind Kaolin, Glimmer, Talkum und Kalziumcarbonat. Es ist auch bevorzugt, wenn die vorstehend erwähnten Füllstoffe in Form einer Mischung verwendet werden. Es hat sich gezeigt, dass es besonders günstig ist, wenn die Füllstoffe einen Durchmesser von 0,1 bis 200, besonders bevorzugt von 0,1 bis 100 µm aufweisen. Die Auswahl der Partikelgröße der Füllstoffe ist offensichtlich auch für Einstellung der Viskosität wichtig. Es ist hierbei auch möglich, neben einer monomodalen Teilchengrößenverteilung eine bimodale Teilchengrößenverteilung einzusetzen. Eine weitere bevorzugte Variante zur Steuerung der Viskosität der erfindungsgemäßen Farbe besteht darin, dass die Oberflächen der Füllstoffpartikel funktionalisiert werden. Unter funktionalisierten Füllstoffpartikeln gemäß der vorliegenden Erfindung werden solche verstanden, bei denen die funktionellen Gruppen sowohl über eine kovalente Bindung oder auch durch einfache Wechselwirkungen die an die Oberfläche gebunden sind. Es können auch nachträglich behandelte Partikel z. B. mit einer Hydrophobierungsschicht eingesetzt werden.

Bei der erfindungsgemäßen Farbe ist es weiterhin wesentlich, dass ein Verdicker eingesetzt wird. Der Verdicker wird gemäß der vorliegenden Erfindung mit 0,1 - 3 Gew.-% eingesetzt. Aus stofflicher Sicht sind bei den Verdickern insbesondere alle im Stand der Technik bekannten Polycarboxylatverdicker möglich. Beispiele hierfür sind Polycarboxylate, Urethanverdicker, Polysaccharide und Celluloseether.

Die erfindungsgemäße Dispersionsfarbe kann selbstverständlich wie bisher aus dem Stand der Technik schon bekannt neben 0,1 bis 2 Gew % Dispergiermitteln weitere. Additive in einer Menge bis zu 5 Gew.-% enthalten. Beispiele für derartige weitere Additive sind, Stabilisatoren, Entschäumer, Konservierungsmittel und/oder Hydrophobierungsmittel.

Wesentlich ist nun, dass die Dispersionsfarbe, wie vorstehend beschrieben, ausgezeichnet geeignet ist, um sie mittels eines Spritzverfahrens zu verarbeiten. Gemäß der vorliegenden Erfindung wird dabei so vorgegangen, dass die Dispersionsfarbe aus einem Reservoir bevorzugt einem Farbgebinde über eine Fördereinheit und einer Verbindungsleitung zu einer Airless-Pistole geführt wird. Wichtig dabei ist, dass der Spritzdruck der dabei eingestellt wird, 50-135 bar bevorzugt 70-80 bar, gemessen an der Pistole, beträgt. Dadurch werden offensichtlich alle charakteristischen Größen die für eine Zerstäubung wichtig sind, wie Düsendurchmesser d, Lamellendicke 1, mittlere Austrittsgeschwindigkeit u, die Viskosität u, sowie die Oberflächenspannung σ und die Dichte ρ günstig beeinflusst. Damit ergeben sich für das erfindungsgemäße Verfahren im Schnitt größere Tröpfchen verglichen mit an und für sich bekannten Airless-Verfahren sowie sehr hohe Auftragswirkungsgrade bis zu 99 %.

Vorteilhaft ist es beim erfindungsgemäßen Verfahren, wenn als Fördereinrichtung eine Membranpumpe eingesetzt wird. Es hat sich weiterhin als günstig erwiesen, wenn die Verbindungsleitung z. B. in Form eines Schlauches, beheizbar ist. Dadurch kann sichergestellt werden, dass die Dispersionsfarbe vom Reservoir, d. h. vom Farbgebinde durch die Fördereinheit zum Zerstäuber im Wesentlichen unabhängig von der Umgebungstemperatur geführt werden kann. Günstig ist es hierbei, wenn die Temperatur im Bereich von 27-40 °C, insbesondere von 30-38 °C eingestellt wird. Das Verfahren muss dabei so geführt werden, dass die vorstehend genannten Temperaturen bei der Spritzpistole erreicht wird. Dadurch wir sichergestellt, dass die überragenden Eigenschaften der Dispersionsfarbe wie vorstehend erläutert, erhalten bleibt.

Überraschend hierbei ist es insbesondere, dass trotz der beim Verfahren eingesetzten hohen Drücke und der Temperatur die positiven physikalischen Eigenschaften, d. h. insbesonders die hohe Viskosität im Wesentlichen nicht beeinträchtigt wird.

Als weiterhin günstiger Faktor hat es sich erwiesen, wenn die eingesetzte Airless-Pistole mit einer Doppeldüse ausgerüstet ist. Die Anordnung der Ausgestaltung der Doppeldüsen sollte dabei so gewählt sein, dass sich die Spritzstrahlen in Längsrichtung überschneiden. Hierzu sind die Doppeldüsen in Form von zwei in Reihe angeordneten schlitzartigen Düsenöffnungen als besonders günstig anzusehen.

Die Erfindung betrifft weiterhin die Verwendung der vorstehend beschriebenen Dispersionsfarbe zum Aufbringen der Farbe mittels eines Airless-Verfahrens.

Die Erfindung wird nachfolgend anhand einer Rahmenrezeptur und den Fign. 1 bis 5 näher erläutert.
- Fig. 1: zeigt dabei den schematischen Aufbau einer Vorrichtung zur Durchführung des erfin- dungsgemäßen Verfahrens;
- Fig. 2: zeigt den Vergleich der erfindungsgemäßen Farbe mit einer Farbe des Standes der Tech- nik in Bezug auf die mittlere Tropfengröße;
- Fig. 3: zeigt die Viskosität der erfindungsgemäßen Farbe in zwei Verdünnungsstufen mit einer Farbe des Standes der Technik in einem vor- bestimmten Scherratenbereich;
- Fig. 4: zeigt wiederum den Vergleich einer Farbe des Standes der Technik mit der erfindungs- gemäßen Farbe in Bezug auf die Volumenver- teilung der gebildeten Tröpfchen sowie die Anzahl der Tröpfchen und
- Fig. 5: zeigt eine Auswertung von Spritzbildern ei- ner erfindungsgemäßen Farbe und einer Farbe des Standes der Technik.

Nachfolgend ist eine Rahmenrezeptur einer erfindungsgemäßen Farbe wiedergegeben, die nachfolgend mit "NESPRI" bezeichnet wird.

### NESPRI-Rahmenrezept

| | | Gewichtsprozent |
|---|---|---|
| Bindemittel | | 12 |
| | - Acrylharz, in Dispersion | |
| | - Silikonharz, in Dispersion | |
| | | |
| Pigmente | | |
| | Titandioxid | 12 |
| | | |
| Füllstoffe | | 41 |
| | - Kaolin | |
| | - Glimmer | |
| | - Talkum | |
| | - Calciumcarbonate | |
| | | |
| Dispergiermittel | | 0,4 |
| | - Polycarboxylate | |
| | | |
| Verdickungsmittel | | 0,4 |
| | - Polycarboxylate | |
| | | |
| Additive | | 1,6 |
| | | |
| Konservierungsmittel | | 0,1 |
| | - Wasser | 32,5 |

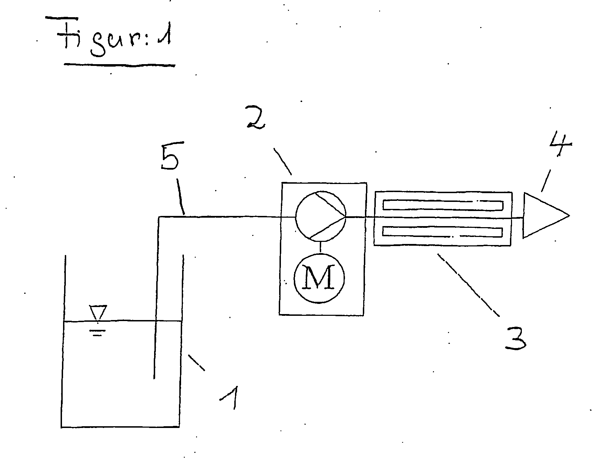

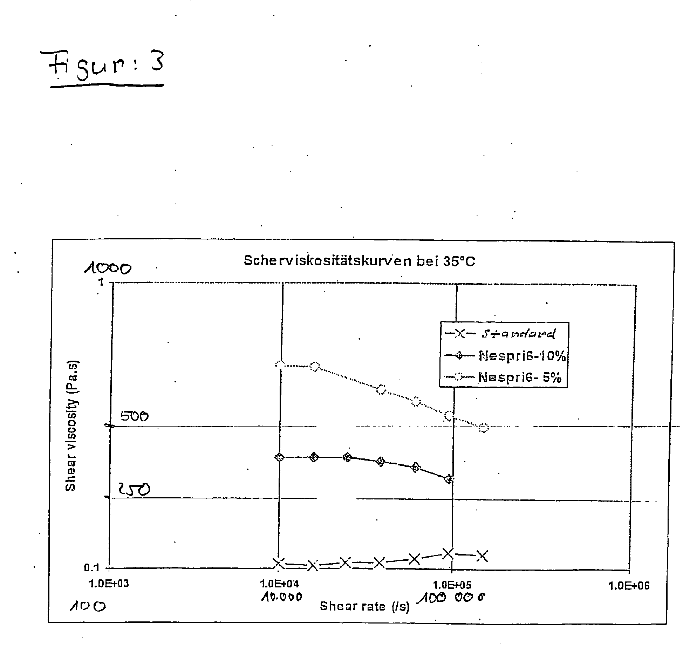

Fig. 1 zeigt schematisch den Aufbau einer Vorrichtung zur Durchführung des erfindungsgemäßen Verfahrens. Die Vorrichtung besteht aus einem mit 1 bezeichneten Reservoir in Form eines Farbgebindeeimers. Die Dispersionsfarbe wird dabei aus dem Farbgebindeeimer 1 über eine Zuleitung 5 mittels einer Membranpumpe als Farbfördereinrichtung transportiert. Wesentlich beim erfindungsgemäßen Verfahren ist nun, dass die mittels der Membranpumpe aus dem Farbgebinde 1 entnommene Farbe über eine Verbindungsleitung 3 zur Airless-Pistole 4 geführt wird, wobei die Verbindungsleitung 3 in Form eines beheizten Schlauches ausgebildet ist. Dies ist symbolisch durch die in Fig. 3 abgebildeten Strukturen zu erkennen. Beim erfindungsgemäßen Verfahren ist wesentlich, dass das Verfahren so geführt wird, dass ein Spritzdruck gemessen an der Airless-Pistole 4 von 55-135 bar bevorzugt von 70-80 bar eingestellt wird. Weiterhin ist es wichtig, dass zur Sicherstellung der physikalischen Eigenschaften die Farbe in der Verbindungsleitung 3, d. h. in dem Schlauch so temperiert wird, dass der Viskositätsbereich nicht wesentlich durch den Arbeitsdruck und die Umgebungstemperatur beeinflusst wird. Hierzu ist es erforderlich, eine Temperierung durchzuführen mit der Maßgabe, dass die Temperatur gemessen an der Airless-Pistole im Bereich von 27-40°, besonders bevorzugt im Bereich von 30-38 °C liegt. Sofern diese Bedingungen eingehalten werden, ist eine optimale Tropfengrößenbildung erreicht. Wesentlich ist weiterhin, dass die Airless-Pistole 4 über eine Doppeldüse verfügt. Die Doppeldüse ist dabei von der Geometrie und der Anordnung so zu wählen, dass sich Spritzstrahlen in Längsrichtung überschneiden. Als günstig hat es sich hierbei erwiesen, wenn die Doppeldüse in Form von zwei in Reihe angeordneten schlitzartigen Düsenöffnungen ausgebildet ist.

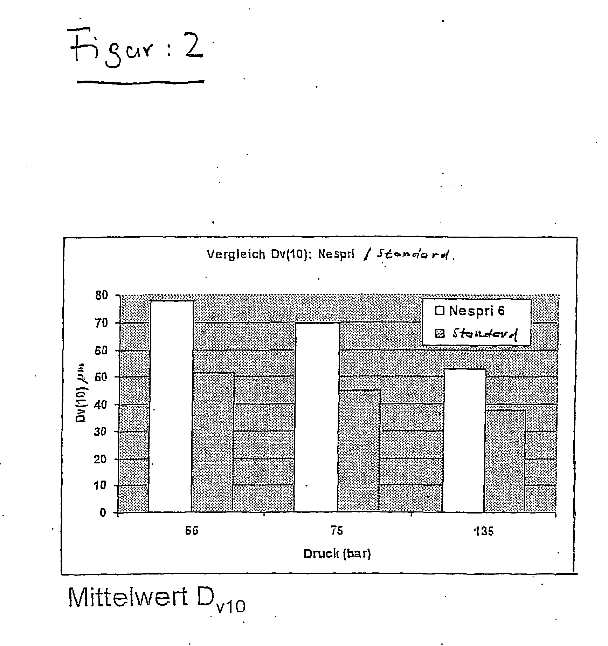

Fig. 2 zeigt den Vergleich des Mittelwertes Dᵥ₁₀ der erfindungsgemäßen Farbe NESPRI6 mit einer Farbe des Standes der Technik. Wie Fig. 2 zeigt, weist die erfindungsgemäße Farbe in allen untersuchten Druckbereichen 55, 75 und 135 bar den Farben des Standes der Technik in Bezug auf den Mittelwert Dᵥ₁₀ deutlich überlegen. Der Mittelwert Dᵥ₁₀ ist dabei so definiert, dass 10 % des Gesamtvolumens in Tröpfchen vorliegen, die kleiner oder gleich dem angegebenen Wert sind. Im Vergleich zu den Farben des Standes der Technik größere Mittelwerte Dᵥ₁₀ auf d.h. eine deutliche Reduktion der Feinanteile. Die Tröpfchengröße ist in µm (0-80) angegeben.

Fig. 3 zeigt den Vergleich der erfindungsgemäßen Farbe NESPRI 6 in zwei Verdünnungen, nämlich mit 10 % und 5 % wiederum mit einer Farbe des Standes der Technik in Bezug auf die Scherviskosität in Abhängigkeit eines vorgegebenen Scherratenbereiches. Wie aus der Figur deutlich hervorgeht, zeigt die erfindungsgemäße Farbe im Scherratenbereich zwischen 1 E⁰⁴ und 1,5 E^{0,5} deutlich höhere Viskositäten. Dies wirkt sich positiv beim vorstehend beschriebenen Spritzverfahren aus.

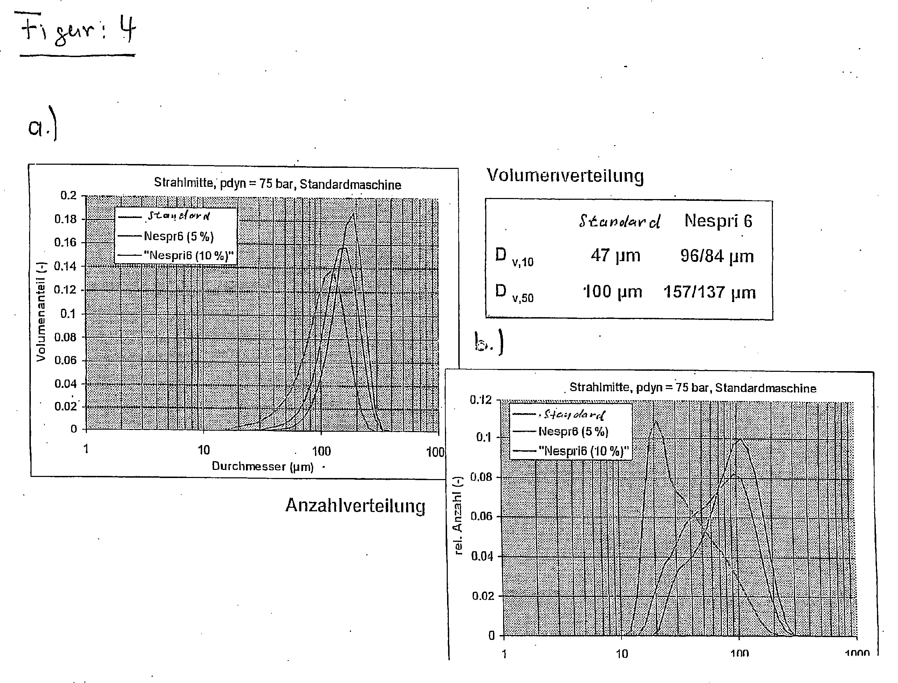

Fig. 4 zeigt einerseits in 4a, die Volumenverteilung der Farbe NESPRI6 und einer Farbe des Standes der Technik und die Fig. 4b zeigt die Anzahl der Tröpfchen wiederum für die beiden vorstehend erwähnten Farben. Die Definition von Dᵥ₁₀ und Dᵥ₅₀ entspricht der der unter Fig. 1 angegebenen, wobei bei Fig. 4b) die Tröpfchenanzahl abgebildet ist.

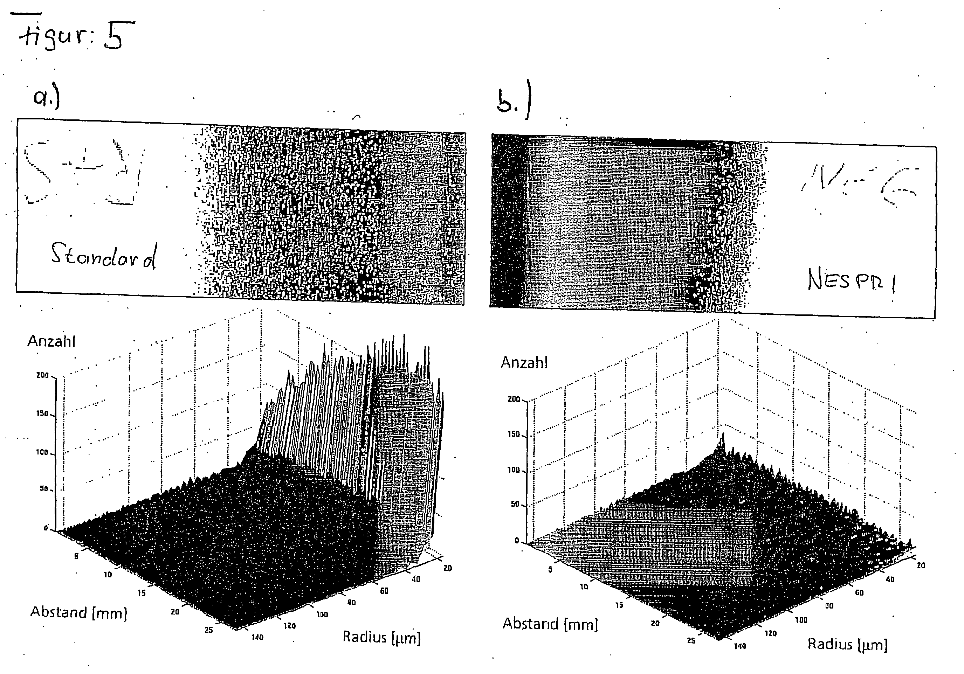

Fig. 5 zeigt die Auswertung der Spritzbilder hinsichtlich des Oversprays. Ausgewertet wurden dabei nicht die Tröpfchen sondern das durch das Sprühen erzeugte Spritzbild. Fig. 5 zeigt dabei die überlegenen Eigenschaften der erfindungsgemäßen Farbe, wenn ein Auftrag mittels des beanspruchten.Verfahrens erfolgt. Die abgebildete Graphik nach Fig. 5a zeigt dabei das Spritzbild mit einer Farbe des Standes der Technik. Aus der Graphik sind dabei sowohl die Anzahl der auf dem Spritzbild ausgewerteten Spritzer sowie dessen Abstand von der gedachten Null-Linie und der Radius zu erkennen. Aus Fig. 5a wird dabei deutlich, dass die Farben des Standes der Technik einen Overspray durch sehr viele kleine Farbpunkte erzeugen; die im Wesentlichen zwischen 20 und 40 µm liegen.

Überraschenderweise gelingt es nun mit der erfindungsgemäßen Farbe diesen Overspray nahezu vollständig zu eliminieren. Sowohl aus der graphischen Darstellung wie aus der darüber angeordneten Aufnahme des Sprühbildes wird deutlich, dass durch die erfindungsgemäße Farbe in Verbindung mit dem Auftragsverfahren eine nahezu vollständige Beseitigung des Oversprays erreicht wird.

Aus Fig. a) ist deutlich zu erkennen, dass der Durchmesser der Tröpfchen, die mit der erfindungsgemäßen Farbe realisiert werden, deutlich größer ist, unter den gleichen Versuchsbedingungen wie diejenigen die mit einer Farbe des Standes der Technik, erreicht werden. Noch deutlicher wird der Unterschied, wenn die Anzahl der Tröpfchen wie in Fig. 4b zu erkennen berücksichtigt wird. Daraus geht hervor, dass die erfindungsgemäße Farbe hier im Beispiel NESPRI6 eine Nebelbildung um bis zu 85 % reduziert.

## Patentansprüche

1. Farbe auf Basis mindestens einer Polymerdispersion mit Pigmenten, Füllstoffen, Verdicker sowie Dispergiermitteln und Additiven,
**dadurch gekennzeichnet , dass** sie
a) 2-20 Gew.-% Polymerdispersion gerechnet als Feststoffanteil,
b) 2-35-Gew.-% Pigmente,
c) 5-60-Gew.-% Füllstoffe mit einem Partikeldurchmesser von 0,1-200µm
d) 0,1-3-Gew.-% Verdicker,
e) 0,1-2-Gew.-% Dispergiermittel sowie
f) maximal 5 Gew.-% weitere Additive und zu 100 Gew.-% ergänzende Anteile an Wasser enthält
mit der Maßgabe dass die Dispersion eine Viskosität von 3,5 bis 5 · 10² m Pa/s aufweist, wobei die Viskosität bei einer Schergeschwindigkeit von 30.000 . 1/s mit der Kapillarrheometrie bestimmt worden ist.

2. Farbe nach Anspruch 1, **dadurch gekennzeichnet, dass** die Polymerdispersion ausgewählt ist aus Polymeren, die aus den Monomeren Cärbonsäurevinylestern mit 3-20 C-Atomen, N-Vinylpyrrolidon, ethylenisch ungesättigten Carbonsäuren, deren.Ester deren Amide oder deren Anhydride, Styrol bzw. deren Derivat, und/oder α-Olefine erhalten worden ist.

3. Farbe nach Anspruch 2, **dadurch gekennzeichnet, dass** es eine Poly-Acrylacrylat-, Acrylharz- und/oder Silikonharzdispersion ist.

4. Farbe nach einem der vorhergehenden Ansprüche, **dadurch gekennzeichnet, dass** die Pigmente ausgewählt sind aus Titandioxid, Eisenoxid, Chromoxid, Kobaltblau, Phtalocyaninpigmente, Spinellpigmente sowie Nickel- und Chromtitanat, Azopigmente, Chinacridonpigmente und/oder Dioxazinpigmente.

5. Farbe nach Anspruch 4, **dadurch gekennzeichnet, dass** das Pigment Titandioxid ist.

6. Farbe nach einem der vorhergehenden Ansprüche, **dadurch gekennzeichnet, dass** die Füllstoffe einen Durchmesser von 0,1 bis 100µm aufweisen und ausgewählt sind aus Silikaten, Carbonaten, Flussspat sulfate und Oxiden.

7. Farbe nach einem der vorhergehenden Anspruchs, **dadurch gekennzeichnet, dass** die Oberfläche der Füllstoffe funktionalisiert ist.

8. Farbe nach einem der vorhergehenden Ansprüche, **dadurch gekennzeichnet, dass** der Verdicker ausgewählt ist aus Polycarboxylaten, Urethanverdickern, Polysacchariden und/oder Celluloseethern

9. Farbe nach einem der vorhergehenden Ansprüche, **dadurch gekennzeichnet, dass** die weiteren Additive, Stabilisatoren, Entschäumer, Konservierungsmittel und/oder Hydrophobierungsmittel sind.

10. Verfahren zum Auftragen der Farbe nach mindestens einem der Ansprüche 1 bis 9, mit einem Spritzverfahren, **dadurch gekennzeichnet, dass** die Dispersionsfarbe aus einem Reservoir über eine Fördereinheit und eine Verbindungsleitung zu einer Airless-Pistole geführt und bei 55-135 bar Spritzdruck, gemessen an der Pistole, versprüht wird.

11. Verfahren nach Anspruch 10, **dadurch gekennzeichnet, dass** der Druck 70-80 bar beträgt.

12. Verfahren nach Anspruch 11, **dadurch gekennzeichnet, dass** als Fördereinheit eine Membranpumpe eingesetzt wird.

13. Verfahren nach Anspruch 11 oder 12, **dadurch gekennzeichnet, dass** als Verbindungsleitung ein temperierbarer Schlauch eingesetzt wird.

14. Verfahren nach Anspruch 13, **dadurch gekennzeichnet**, **dadurch gekennzeichnet, dass** die Temperatur so gesteuert wird, dass die Dispersionsfarbe an der Pistole eine Temperatur von 27-40 °C, bevorzugt 30-38 °C aufweist.

15. Verfahren nach einem der vorhergehenden Ansprüche, **dadurch gekennzeichnet, dass** die Airless-Pistole mit einer Doppeldüse ausgerüstet wird.

16. Verfahren nach Anspruch 15, **dadurch gekennzeichnet, dass** die Doppeldüse in Form von zwei nebeneinander, bevorzugt in Reihe, angeordneten schlitzartigen Düsenöffnungen ausgebildet wird.

17. Verfahren nach Anspruch 15 oder 16, **dadurch gekennzeichnet, dass** die Anordnung und Ausgestaltung der Doppeldüsen so gewählt ist, dass sich die Spritzstrahlen in Längsrichtung überschneiden.

18. Verwendung der Dispersionsfarbe nach mindestens einem der Ansprüche 1 bis 9 zum Aufbringen der Dispersionsfarbe mittels eines Airless-Verfahrens.

## Claims

1. Paint based on at least one polymer dispersion with pigments, fillers, thickeners, dispersants and additives,
**characterised in that**
it contains:
a) 2-20 wt-% polymer dispersion calculated as a solid component,
b) 2-35 wt-% pigments,
c) 5-60 wt-% fillers having a particle diameter of 0.1-200 µm
d) 0.1-3 wt-% thickeners,
e) 0.1-2 wt-% dispersants, and
f) a maximum of 5 wt-% further additives and water to make up to 100%,
with the proviso that the dispersion has a viscosity of 3.5 to 5 · 10² m Pa/s, the viscosity being determined at a shear rate of 30,000 · 1/s with a capillary rheometer.

2. Paint according to claim 1, **characterised in that** the polymer dispersion is selected from polymers which have been obtained from the monomers carboxylic acid vinyl esters having 3-20 carbon atoms, N-vinylpyrrolidone, ethylenically unsaturated carboxylic acids, their esters, amides or anhydrides, styrene or its derivative, and/or α-olefins.

3. Paint according to claim 2, **characterised in that** it is a polyacryl acrylate-, acrylic resin- and/or silicone resin dispersion.

4. Paint according to one of the preceding claims, **characterised in that** the pigments are selected from titanium dioxide, iron oxide, chromium oxide, cobalt blue, phthalocyanine pigments, spinel pigments as well as nickel and chromium titanate, azoic pigments, quinacridone pigments and/or dioxazine pigments.

5. Paint according to claim 4, **characterised in that** the pigment is titanium dioxide.

6. Paint according to one of the preceding claims, **characterised in that t**he fillers have a diameter of between 0.1 and 100 µm and are selected from silicates, carbonates, fluorite sulphates and oxides.

7. Paint according to one of the preceding claims, **characterised in that** the surface of the fillers is functionalised.

8. Paint according to one of the preceding claims, **characterised in that** the thickener is selected from polycarboxylates, urethane thickeners, polysaccharides and/or cellulose ethers.

9. Paint according to one of the preceding claims, **characterised in that** the further additives are stabilisers, anti-foaming agents, preservatives and/or hydrophobing agents.

10. Method for applying the paint according to at least one of claims 1 to 9, using a spraying process, **characterised in that** the dispersion paint is led out of a reservoir via a conveying unit and a connecting line to an airless spray gun and sprayed at 55-135 bar spraying pressure measured at the spray gun.

11. Method according to claim 10, **characterised in that** the pressure is 70-80 bar.

12. Method according to claim 11, **characterised in that** a diaphragm pump is used as the conveying unit.

13. Method according to claim 11 or 12, **characterised in that** a temperature-controlled hose is used as the connecting line.

14. Method according to claim 13, **characterised in that** the temperature is so controlled that the dispersion paint has a temperature of 27-40°C, preferably 30-38°C, at the spray gun.

15. Method according to one of the preceding claims, **characterised in that** the airless spray gun is equipped with a double nozzle.

16. Method according to claim 15, **characterised in that** the double nozzle is designed in the form of two slit-like nozzle apertures arranged beside one another, preferably in a row.

17. Method according to claim 15 or 16, **characterised in that** the arrangement and design of the double nozzles is so selected that the spray jets intersect in the longitudinal direction.

18. Use of the dispersion paint according to at least one of claims 1 to 9 for applying the dispersion paint by means of an airless method.

## Revendications

1. Peinture à base d'au moins une dispersion polymère contenant des pigments, des charges, des agents épaississants, ainsi que des agents dispersants et des additifs,
**caractérisée en ce qu'**elle contient
a) 2 à 20 % en poids d'une dispersion polymère calculés sous la forme d'une fraction de solides,
b) 2 à 35 % en poids de pigments,
c) 5 à 60 % en poids de charges ayant un diamètre particulaire de 0,1 à 200 µm
d) 0,1 à 3 % en poids d'agents épaississants,
e) 0,1 à 2 % en poids d'agents dispersants, et
f) au maximum 5 % en poids d'autres additifs
et des fractions d'eau pour compléter jusqu'à 100 % en poids,
à condition que la dispersion présente une viscosité de 3,5 à 5·10² mPa.s, la viscosité étant déterminée à une vitesse de cisaillement de 30 000 1/s par rhéométrie capillaire.

2. Peinture selon la revendication 1, **caractérisée en ce que** la dispersion polymère est choisie parmi des polymères qui ont été obtenus à partir des monomères d'esters vinyliques d'acide carboxylique ayant 3 à 20 atomes de carbone, de N-vinylpyrrolidone, d'acides carboxyliques à insaturation éthylénique, de leurs esters, amides ou anhydrides, du styrène ou de son dérivé et/ou de α-oléfines.

3. Peinture selon la revendication 2, **caractérisée en ce qu'**il s'agit une dispersion de poly(acrylate d'acryle), de résine acrylique et/ou de résine de silicone.

4. Peinture selon l'une quelconque des revendications précédentes,
**caractérisée en ce que** les pigments sont choisis parmi le dioxyde de titane, l'oxyde de fer, l'oxyde de chrome, le bleu de cobalt, des pigments de phtalocyanine, des pigments de type spinelle, ainsi que le titanate de nickel et de chrome, des pigments azoïques, des pigments de quinacridone et/ou des pigments de dioxazine.

5. Peinture selon la revendication 4, **caractérisée en ce que** le pigment est le dioxyde de titane.

6. Peinture selon l'une quelconque des revendications précédentes, **caractérisée en ce que** les charges présentent un diamètre de 0,1 à 100 µm et sont choisies parmi des silicates, des carbonates, du spath-fluor, des sulfates et des oxydes.

7. Peinture selon l'une quelconque des revendications précédentes, **caractérisée en ce que** la surface des charges est fonctionnalisée.

8. Peinture selon l'une quelconque des revendications précédentes, **caractérisée en ce que** l'agent épaississant est choisi parmi des polycarboxylates, des agents épaississants à base d'uréthane, des polysaccharides et/ou des éthers de cellulose.

9. Peinture selon l'une quelconque des revendications précédentes, **caractérisée en ce que** les autres additifs sont des agents stabilisants, des agents anti-moussants, des conservateurs et/ou des agents conférant un caractère hydrophobe.

10. Procédé pour appliquer la peinture selon au moins l'une quelconque des revendications 1 à 9, avec un procédé de pulvérisation, **caractérisé en ce que** la peinture de dispersion est délivrée depuis un réservoir, via une unité de transport et une conduite de raccordement, vers un pistolet à air comprimé et est pulvérisée à une pression de pulvérisation de 55 à 135 bars, mesurée sur le pistolet.

11. Procédé selon la revendication 10, **caractérisé en ce que** la pression est de 70 à 80 bars.

12. Procédé selon la revendication 11, **caractérisé en ce que** l'on utilise une pompe à diaphragme comme unité de transport.

13. Procédé selon la revendication 11 ou 12, **caractérisé en ce que** l'on utilise, comme conduite de raccordement, un tuyau dont on peut régler la température.

14. Procédé selon la revendication 13, **caractérisé en ce que** la température est réglée, de sorte que la peinture de dispersion au niveau du pistolet présente une température de 27 à 40 °C, de préférence, de 30 à 38°C.

15. Procédé selon l'une quelconque des revendications précédentes, **caractérisé en ce que** le pistolet à air comprimé est pourvu d'une buse double.

16. Procédé selon la revendication 15, **caractérisé en ce que** la buse double se présente sous la forme de deux ouvertures de buse en forme de fente, ménagées l'une à côté de l'autre, de préférence en rangée.

17. Procédé selon la revendication 15 ou 16, **caractérisé en ce que** l'agencement et la forme de réalisation de la buse double sont choisis de sorte que les faisceaux de pulvérisation se croisent dans la direction longitudinale.

18. Utilisation de la peinture de dispersion selon au moins l'une quelconque des revendications 1 à 9, dans le but d'appliquer la peinture de dispersion au moyen d'un procédé à air comprimé.
